Europäisches Patentamt

European Patent Office

Office européen des brevets

(11) Publication number: **0 312 288**
**A1**

# (12) EUROPEAN PATENT APPLICATION

(21) Application number: 88309477.3

(22) Date of filing: 11.10.88

(51) Int. Cl.4: **B32B 27/32**

(30) Priority: 12.10.87 GB 8723897

(43) Date of publication of application:
19.04.89 Bulletin 89/16

(84) Designated Contracting States:
ES GR

(71) Applicant: COURTAULDS FILMS &
PACKAGING (HOLDINGS) LTD.
Bath Road
Bridgwater Somerset TA6 4PA(GB)

(72) Inventor: Kendall, Kenneth Douglas
St. Clair Main Road
Middlezoy Bridgewater Somerset(GB)
Inventor: Dean, Darren William
65 Oakgrove Way Beechwood Park Estate
Bridgewater Somerset(GB)

(74) Representative: Claisse, John Anthony, Dr.
Courtaulds Films & Packaging (Holdings) Ltd
Bath Road
Bridgwater Somerset TA6 4PA(GB)

(54) Polymeric films.

(57) The invention concerns heat sealable polypropylene films including a layer of voided polypropylene homopolymer with a heat seal layer. The heat seal layer includes a linear low density polyethylene having a melt flow index of at least 4 as measured by ASTM D1238/73 under condition 240°C and 298.2 KPa. Seals formed with films of the present invention have shown good hot tack combined with good sealability. The heat seal layers have also shown good acceptability to cold seal adhesives.

EP 0 312 288 A1

## Polymeric Films

This invention concerns voided polypropylene films including a heat seal layer.

Voided polypropylene films produced by orienting polypropylene homopolymer containing a particulate filler have found wide acceptance as packaging materials. However, although voided and non-voided polypropylene homopolymer layers will heat seal to themselves, the temperatures required to effect such seals cause shrinkage of the film in the region of the seal, and a distorted seal results. Various polymer layers have been proposed for voided and non-voided polypropylene homopolymer films which provide the films with heat sealability at lower temperatures, thereby avoiding such shrinkage of the film. In particular it has been proposed to use layers of polymers containing units derived from at least two of ethylene, propylene and butene. It has also been proposed to use blends of polymers to form heat seal layers, for example to provide increased hot tack strength at lower temperatures.

While such previously proposed heat seal layers can provide satisfactory seals without distortion of the film in the region of the seal, improvements are constantly being sought in the overall properties of heat sealable voided polypropylene films.

According to the present invention there is provided a heat sealable polypropylene film comprising a layer of voided polypropylene homopolymer having a heat seal layer thereon, the heat seal layer comprising a linear low density polyethylene having a melt flow index of at least 4 as measured by ASTM D1238/73 under condition 240°C and 298.2 KPa.

Polypropylene films of the present invention, in addition to forming good heat seals at temperatures below those at which distortion of the seal results, have shown other advantages. For example, corona discharge treatment of the film to provide printability can be effected under less stringent conditions, thereby leading to lower odour for the treated film. Heat seals produced with films of the present invention have shown good hot tack combined with good sealability. Furthermore, the heat seal layers have shown good acceptability to cold seal adhesives. Migration of additives, for example slip and anti-static agents, from the voided homopolymer layer, has also been found to be surprisingly substantially unaffected compared with that for hitherto proposed heat seal layers.

The linear low density polyethylene of the heat seal layer should have a melt flow index of at least 4 as measured by ASTM D1238/73 under condition 240°C and 298.2 KPa, preferably from 5 to 7. High values of melt flow index can result in the polymer being difficult if not impossible to extrude with the polypropylene homopolymer.

The linear low density polyethylene preferably contains units derived from oct-1-ene. The density of the polyethylene will in general be in the range of from 0.917 to 0.924 g/cm³.

Although a linear low density polyethylene can be used alone to produce a heat seal layer of a film in accordance with the invention, blends thereof with at least one further polymer can be used. Preferred further polymers are ionic polymers, and in particular ionic copolymers and terpolymers. Examples of such further polymers include polymers containing units derived from ethylene, and an acrylic ester and/or maleic anhydride.

The weight ratio of linear low density polyethylene to the further polymer or polymers is preferably from 95:5 to 30:70, advantageously from 70:30 to 30:70, and especially about 60:40.

The heat seal layer is preferably from 0.5 to 5 microns thick, more particularly from 1 to 2.5 microns thick, and advantageously about 1.5 microns thick. Typical total film thicknesses are from 30 to 60 microns.

Heat sealable films of the present invention can, if desired, have a further heat seal layer which can be the same as or different from that already referred to. However, other layers can also be present to provide the films of the present invention with particular properties, for example an adhesive layer can be present to allow the films to be laminated to other films.

Films of the present invention can be produced by known methods, for example by coextruding a layer of polypropylene homopolymer containing a voiding agent with a layer of linear low density polyethylene and thereafter orienting the extruded film to cause voiding of the homopolymer layer.

The following Example is given by way of illustration only. All parts are by weight unless stated otherwise.

### EXAMPLE

A three layer film was co-extruded at 240°C to produce a core of polypropylene homopolymer containing about 6% by weight of chalk with a layer on each side consisting of a 60:40 blend of linear low density polyethylene and an ionic polymer (a terpolymer of ethylene, an acrylic ester and maleic anhydride) to form a chill-cast web.

The cast web was then stretched by a ratio of 4.5:1 in the machine direction at temperature of 100°C, and thereafter by a ratio of 9.5:1 in the transverse direction at a temperature of 160°C.

The resultant film, which had an overall thickness of 43.5 microns with a heat seal layer on each side of a voided core each of 1.5 microns thickness, showed good hot tack at low temperatures combined with good sealability.

## Claims

1. A heat sealable polypropylene film comprising a layer of voided polypropylene homopolymer having a heat seal layer thereon, the heat seal layer comprising a linear low density polyethylene having a melt flow index of at least 4 as measured by ASTM D1238/73 under condition 240°C and 298.2 KPa.

2. A film according to claim 1, wherein the linear low density polyethylene has a melt flow index of from 5 to 7.

3. A film according to either of the preceding claims, wherein the linear low density polyetheylene contains units derived from oct-1-ene.

4. A film according to any of the preceding claims, wherein the linear low density polyethylene has a density of from 0.917 to 0.924g/cm$^3$.

5. A film according to any of the preceding claims, wherein the heat seal layer comprises a blend of the linear low density polyethylene with at least one further polymer.

6. A film according to claim 5, wherein the further polymer comprises an ionic polymer.

7. A film according to claim 6, wherein the ionic polymer is a copolymer or terpolymer.

8. A film according to claim 6 or claim 7, wherein the ionic poymer contains units derived from ethylene and an acrylic ester and/or maleic anhydride.

9. A film according to any of claims 5 to 8, wherein the weight ratio of linear low density polyethylene to the further polymer or polymers is from 95:5 to 30:70.

10. A film according to claim 9, wherein the further polymer is a terpolymer, and the weight ratio of linear low density polyethylene to the terpolymer is from 30:70 to 70:30.

11. A film according to claim 10, wherein the weight ratio is about 60:40.

12. A film according to any of the preceding claims, wherein the heat seal layer has a thickness of from 0.5 to 5 microns.

13. A film according to any of the preceding claims, having a further heat seal coating thereon.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 201 799 (WOLFF WALSRODE AG) * Claims 1,3-5; page 2, line 3 - page 4, line 15; examples 1-4 * | 1,3,4, 12,13 | B 32 B 27/32 |
| A | GB-A-2 029 762 (MITSUI PETROCHEMICAL IND.) * Claim 1; page 1, line 63 - page 4, line 45; example 3 * | 1-8 | |
| A | EP-A-0 002 606 (MOBIL OIL CO.) * Claims 1-6; page 3, paragraph 2 - page 6, paragraph 1; example 4 * | 1-4 | |
| A | EP-A-0 065 898 (SOC. CHIMIQUE DES CHARBONNAGES) * Claim 1; page 1, line 34 - page 2, line 34 * | 8,10 | |

TECHNICAL FIELDS SEARCHED (Int. Cl.4)

B 32 B

The present search report has been drawn up for all claims

| Place of search | Date of completion of the search | Examiner |
|---|---|---|
| THE HAGUE | 11-01-1989 | BLASBAND I. |

EPO FORM 1503 03.82 (P0401)